# EUROPÄISCHE PATENTSCHRIFT

(11) **EP 2 888 140 B1**
(45) Veröffentlichungstag und Bekanntmachung des Hinweises auf die Patenterteilung: **19.12.2018**
(21) Anmeldenummer: 13753282.6
(22) Anmeldetag: 09.07.2013
(51) Int. Cl.: B60W 50/00, B60W 30/12, B62D 15/02, B60W 30/14, B60W 30/16, B60W 30/17, B60W 10/04, B60W 10/20, B60W 50/10, B60W 50/14

(54) **FAHRERASSISTENZSYSTEM**
DRIVER ASSISTANCE SYSTEM
SYSTÈME D'ASSISTANCE AU CONDUCTEUR

(30) Priorität: 24.08.2012 DE 102012215057
(43) Veröffentlichungstag der Anmeldung: 01.07.2015
(73) Patentinhaber: Robert Bosch GmbH, 70442 Stuttgart (DE)
(72) Erfinder: BERUSCHA, Frank, 71665 Kleinglattbach (DE); KOCHER, Pascal, 70839 Gerlingen (DE); SCHUMACHER, Jan, 71636 Ludwigsburg (DE)
(86) Internationale Anmeldenummer: PCT/EP2013/064425
(87) Internationale Veröffentlichungsnummer: WO 2014/029547

(56) Entgegenhaltungen:
- EP-A2- 2 098 431
- DE-A1- 10 114 470
- DE-A1- 19 948 913
- DE-A1-102007 052 258
- JP-A- 2005 239 155

## Beschreibung

Die Erfindung betrifft ein Fahrerassistenzsystem mit einem Längsführungsregler und einem Querführungsregler.

### STAND DER TECHNIK

DE 10 2007 052 258 A1 beschreibt ein Fahrerassistenzsystem zur Querführung eines Kraftfahrzeugs mit einer Querregelungs-Vorrichtung, bei der die Querregelungs-Vorrichtung vom aktivierten Zustand in den deaktivierten Zustand wechselt, wenn eine Erfassungseinrichtung erfasst, dass mindestens eine Hand an das zuvor nicht berührte Lenkrad des Fahrzeugs gebracht wird. In einem Beispiel wechselt die Querregelungs-Vorrichtung vom deaktivierten Zustand in den aktivierten Zustand, wenn eine Erfassungseinrichtung erfasst, dass das zuvor von mindestens einer Hand berührte Lenkrad unberührt ist. In einem Beispiel mit aktiviertem ACC-System zur Längsführung des Fahrzeugs beschleunigt das Fahrzeug auf eine durch das ACC-System vorbestimmte maximale Fahrzeuggeschwindigkeit, nachdem eine vorbestimmte erste Grenzgeschwindigkeit überschritten worden ist, falls sich mindestens eine Hand des Fahrers am Lenkrad des Fahrzeugs befindet und die Fahrbahn des Fahrzeugs frei ist, beispielsweise bei der Auflösung eines Staus.

DE 101 14 470 A1 beschreibt eine Spurhalte- und Fahrgeschwindigkeitsregeleinrichtung für Kraftfahrzeuge, bei der ein Spurhalte-Unterstützungssystem (LKS, Lane Keeping Support) durch einen separaten Hauptschalter unabhängig von einem Geschwindigkeitsregler in einen betriebsbereiten Zustand schaltbar ist und im betriebsbereiten Zustand durch dasselbe Einschaltsignal wie der Geschwindigkeitsregler aktivierbar ist. Bei einer Betätigung des Gaspedals soll zusammen mit der Geschwindigkeitsregelung auch die automatische Spurhaltefunktion vorübergehend außer Kraft gesetzt werden und dann wieder einsetzen. Bei einem Deaktivieren des Geschwindigkeitsreglers durch den Fahrer, um das Fahrzeug bis zu einer Sollgeschwindigkeit rollen zu lassen, soll die Spurhaltefunktion aktiviert bleiben, sofern der Fahrer nicht aktiv das Gaspedal betätigt oder in die Lenkung eingreift. Bei einer Fahrgeschwindigkeit unter 40 km/h werden die Regelkreise selbsttätig abgeschaltet.

DE 10 2009 050 399 A1 beschreibt ein Verfahren zur Steuerung des Betriebs eines vollautomatischen, zur unabhängigen Fahrzeugführung ausgebildeten Fahrerassistenzsystems eines Kraftfahrzeugs, bei dem bei Erreichen einer Systemgrenze des Fahrerassistenzsystems, die eine Übernahme der Fahrzeugführung durch den Fahrer erfordert, zusätzlich zu einer Fahrerübernahmeaufforderung ein Aktionsplan ausgeführt wird, um das Fahrzeug durch Fahreingriffe in einen sicheren Zustand, insbesondere den Stillstand des Kraftfahrzeugs, zu überführen. Bei einer Übernahme der Fahrzeugführung durch den Fahrer, die beispielsweise dadurch erkannt wird, dass der Fahrer das Lenkrad und/oder die Pedalerie betätigt, wird das vollautomatische Fahrerassistenzsystem wieder deaktiviert.

DE 10 2010 032 621 A1 beschreibt eine Vorrichtung und ein Verfahren zur Unterstützung eines Fahrers eines Kraftfahrzeuges, bei dem in einem Fahrstreckenspeicher positionsabhängige Höchstquerbeschleunigungswerte, Höchstgiermomentwerte oder Lenkwinkelgrenzwerte abgelegt sind und einer Fahrdynamiksteuer- und/oder Regelvorrichtung zuführbar sind. Entsprechend diesen Sollwerten kann ein Eingriff in die Längs-/Quer-Bewegung des Fahrzeuges vorgenommen werden, um die Längs- und Querdynamik des Fahrzeugs positionsabhängig zu begrenzen. Dabei kann durch Überwachung einer Gaspedalstellung, einer Lenkradstellung und/oder einer Bremspedalstellung eine Deaktivierung der Vorrichtung erreicht werden, wenn beispielsweise bei Ausweich-, Brems- und/oder Überholmanövern starke Soll-Ist-Abweichungen der Stellungen registriert werden.

JP 2005/239155 A beschreibt einen Fahrtregler für ein Fahrzeug, der bei Verwendung eines Geschwindigkeitsregelungssystems und eines Spurhaltesystems einen Übergang der Längsführungskontrolle an den Fahrer ermöglicht, wenn eine Querführungskontrolle bereits durch das Betätigen eines Bremspedals an den Fahrer übergeben wurde. Eine übergeordnete Steuereinrichtung lässt einen Betrieb des Spurhaltesystems nur zu, während das Abstands- und Geschwindigkeitsregelsystem in Betrieb ist und setzt gleichzeitig das Abstands- und Geschwindigkeitsregelsystem und das Spurhaltesystem aus, wenn der Fahrer während des Betriebs beider Systeme die Bremse betätigt.

DE 199 48 913 A1 beschreibt ein System zur Lenksteuerung eines Fahrzeugs, bei dem eine Fahrbahnhalte-Lenkhilfsdrehmoment-Steuerung unterbrochen wird, wenn ein vom Fahrer eingegebenes Lenkdrehmoment ein vorbestimmtes erstes Drehmoment überschreitet. Dadurch kann die Steuerung unterbrochen werden, wenn der Fahrzeugführer durch Betätigung des Lenkrades einen positiven Wunsch ausdrückt, das Fahrzeug selbst zu lenken.

### OFFENBARUNG DER ERFINDUNG

Durch die im Stand der Technik bekannten Fahrerassistenzsysteme kann der Fahrer bei der Fahrzeugführung entlastet werden. Es ist jedoch wünschenswert, wenn, beispielsweise im Falle eines Stauassistenten oder Spurhalteassistenten, der Fahrer nicht durch eine Vielzahl möglicher Systemzustände über den jeweils aktuellen Aktivierungszustand der Teilsysteme eines Fahrerassistenzsystems im Unklaren gelassen wird. Vielmehr sollte das Aktivierungs- und Deaktivierungsverhalten des Fahrerassistenzsystems möglichst einfach und für den Fahrer leicht erfassbar gestaltet sein.

Aufgabe der Erfindung ist es daher, ein Fahrerassistenzsystem, das eine Längs- und Querregelung umfasst, zu schaffen, bei dem Aktivierung und Deaktivierung der Längs- und/oder Quer-Regelung auf eine für den Fahrer möglichst intuitive Weise erfolgt.

Diese Aufgabe wird erfindungsgemäß gelöst durch ein Fahrerassistenzsystem für Kraftfahrzeuge, welches aufweist:
- einen Längsführungsregler, der dazu eingerichtet ist, auf das Antriebssystem des Fahrzeugs einzuwirken,
- eine Sensoreinrichtung zur Erfassung einer Fahrbahnspur,
- einen Querführungsregler zur Auswertung von Signalen der Sensoreinrichtung und zur Ausgabe von Lenkbefehlen an ein Lenkungsstellglied des Fahrzeugs,
- wenigstens ein Bedienelement, durch das der Querführungsregler nur gemeinsam mit oder zusätzlich zu dem Längsführungsregler aktivierbar ist,
- einen Lenkungssensor, der eine Betätigung des Lenkrades des Fahrzeugs durch den Fahrer erfasst,
- einen Bremspedalsensor, der eine Betätigung des Bremspedals des Fahrzeugs erfasst, wobei durch ein Signal des Bremspedalsensors der Querführungsregler und der Längsführungsregler deaktivierbar sind,
- einen Gaspedalsensor, der eine Betätigung des Gaspedals des Fahrzeugs erfasst,
dadurch gekennzeichnet, dass der Querführungsregler durch ein Signal des Lenkungssensors deaktivierbar ist, ohne dass der Längsführungsregler deaktiviert wird, und dass
der Querführungsregler durch ein Signal des Gaspedalsensors deaktivierbar ist, ohne dass der Längsführungsregler deaktiviert wird.

Somit kann eine Aktivierungs-Hierarchie für den Längsführungsregler und den Querführungsregler implementiert werden, gemäß der der Querführungsregler nur gemeinsam mit oder zusätzlich zu dem Längsführungsregler aktivierbar ist, und der Längsführungsregler bei aktiviertem Querführungsregler nur einhergehend mit einer Deaktivierung des Querführungsreglers deaktivierbar ist, insbesondere durch Betätigung des Bremspedals oder durch Bewegung des Lenkrads.

In einer ersten Stufe der Aktivierungs-Hierarchie ist lediglich der Längsführungsregler aktiviert, nicht jedoch der Querführungsregler.

In einer zweiten Hierarchiestufe sind der Längsführungsregler und der Querführungsregler gemeinsam aktiviert. Der Querführungsregler, der als der am stärksten in das Fahrverhalten eingreifende Assistenzsystem empfunden wird, stellt somit eine Steigerung gegenüber der alleinigen Aktivierung des Längsführungsreglers dar.

Dieses Konzept der Aktivierungs-Hierarchie ist für den Fahrer besonders intuitiv zu verstehen. Ein Überstimmen der Lenkungsregelung des Querführungsreglers durch den Fahrer, indem dieser beispielsweise ein einen Schwellwert überschreitendes Lenkmoment auf das Lenkrad aufbringt, oder indem der Fahrer das Lenkrad um einen einen Schwellwert überschreitenden Winkelbetrag dreht, kann eine von der Interpretation des Querführungsreglers abweichende Interpretation der Verkehrssituation durch den Fahrer oder den Wunsch des Fahrers zur Übernahme der Fahrzeuglenkung signalisieren und führt daher zur dauerhaften Deaktivierung des Querführungsreglers. Dies entspricht einem Übergang auf die erste Hierarchiestufe.

Ein Bremseingriff des Fahrers stellt mutmaßlich eine der Sicherheit dienende Maßnahme dar und kann daher eine hinsichtlich der erforderlichen Vorsicht von der Interpretation des Fahrerassistenzsystems abweichende Einschätzung der Situation durch den Fahrer signalisieren. Durch einen Bremseingriff erfolgt daher eine Deaktivierung sowohl des Längsführungsreglers als auch des Querführungsreglers, so dass eine vollständige Übergabe der Kontrolle des Fahrzeugs an den Fahrer ermöglicht wird.

Somit wird, wenn der Fahrer die Regelungsfunktionen des Fahrerassistenzsystems in einer potentiell sicherheitsrelevanten Weise durch einen Lenkeingriff oder einen Bremseingriff überstimmt, das System in einen für den Fahrer intuitiv nachvollziehbaren Betriebszustand gebracht. Der Fahrer kann dann zu gegebener Zeit gezielt durch das wenigstens eine Bedienelement wieder zu einer höheren Hierarchiestufe der Aktivierungs-Hierarchie wechseln.

Beispielsweise kann das Fahrerassistenzsystem eine Deaktivierungseinrichtung umfassen, die dazu eingerichtet ist, gesteuert durch ein Signal des Lenkungssensors den Querführungsregler zu deaktivieren, ohne den Längsführungsregler zu deaktivieren, wobei die Deaktivierungseinrichtung weiter dazu eingerichtet ist, gesteuert durch ein Signal des Bremspedalsensors den Querführungsregler und den Längsführungsregler zu deaktivieren.

Vorzugsweise ist der Lenkungssensor dazu eingerichtet, ein vom Fahrer auf das Lenkrad des Fahrzeugs aufgebrachtes Lenkmoment zu erfassen. Er bildet somit einen Lenkmomentsensor.

Das Fahrerassistenzsystem weist einen Gaspedalsensor auf, der eine Betätigung des Gaspedals erfasst, wobei der Querführungsregler durch ein Signal des Gaspedalsensors deaktivierbar ist, ohne dass der Längsführungsregler deaktiviert wird. Vorzugsweise bewirkt ein Signal des Gaspedalsensors bei dem Längsführungsregler ein vorübergehendes Aussetzen der Regelfunktion des Längsführungsreglers für die Dauer der Betätigung des Gaspedals. Ein Überstimmen der Geschwindigkeitsregelfunktion des Fahrerassistenzsystems durch den Fahrer deaktiviert somit den Querführungsregler. Die Betätigung des Gaspedals stellt einen starken Eingriff in die Regelfunktionen des Fahrerassistenzsystems dar, so dass es für den Fahrer als nachvollziehbar erlebt wird, wenn der Querführungsregler als höchste Stufe der Regelung deaktiviert wird. Der Längsführungsregler kann jedoch bei Betätigung des Gaspedals aktiviert bleiben und lediglich für die Dauer der Betätigung des Gaspedals vom Fahrer überstimmt werden, weil die Betätigung des Gaspedals gewöhnlich den Wunsch nach einer stärkeren Beschleunigung signalisiert, ohne dass dies unter Sicherheitsaspekten erforderlich wäre. Ein solches Verhalten beim Überstimmen eines Geschwindigkeitsreglers kann dem Fahrer auch aus herkömmlichen Längsführungsreglern, beispielsweise einem ACC-System (Adaptive Cruise Control) vertraut sein.

Bei einem beispielsweise als Stauassistent ausgebildeten Querführungsregler ist außerdem bei einer Beschleunigung des Fahrzeugs durch den Fahrer damit zu rechnen, dass eine obere Grenzgeschwindigkeit für die Querführungsregelung bald erreicht wird. Durch die Verknüpfung der Deaktivierung des Querführungsreglers mit der Betätigung des Gaspedals wird hier ein besonders intuitives Verhalten des Systems bewirkt, da eine unmittelbare Kausalität zwischen dem Deaktivieren des Querführungsreglers und der Betätigung des Gaspedals wahrgenommen wird.

Weitere vorteilhafte Ausgestaltungen und Weiterbildungen sind in den Unteransprüchen angegeben.

### KURZE BESCHREIBUNG DER ZEICHNUNGEN

Ausführungsbeispiele der Erfindung sind in den Zeichnungen dargestellt und in der nachfolgenden Beschreibung näher erläutert.

Es zeigen:
- Fig. 1: ein Blockdiagramm eines erfindungsgemäßen Fahrerassistenzsystems; und
- Fig. 2: ein schematisches Diagramm von Aktivierungszuständen eines Längsführungsreglers und eines Querführungsreglers des Systems.

### BESCHREIBUNG VON AUSFÜHRUNGSBEISPIELEN

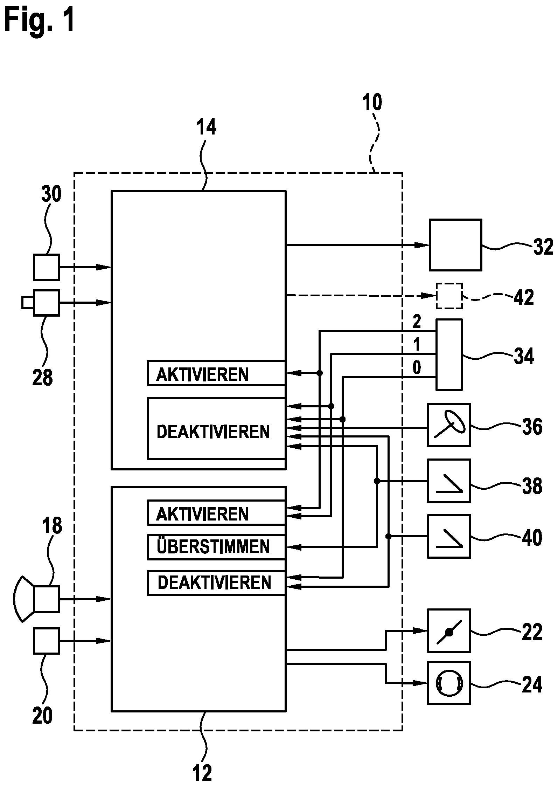

Das in Fig. 1 gezeigte Fahrerassistenzsystem umfasst einen Längsführungsregler 12 und einen Querführungsregler 14, die beispielsweise in Form einer elektronischen Schaltung 10 implementiert sein können.

Der Längsführungsregler 12 bildet einen Geschwindigkeitsregler, insbesondere einen adaptiven Geschwindigkeitsregler in Form eines ACC-Systems (Adaptive Cruise Control). Der Längsführungsregler 12 ist dazu eingerichtet, auf der Basis von Ortungsdaten eines Ortungssystems 18 und Fahrzustandsparametern, beispielsweise einer von einem Geschwindigkeitssensor 20 ermittelten Fahrgeschwindigkeit des Fahrzeugs, durch Eingriff in ein Antriebssystem 22 und ein Bremssystem 24 des Fahrzeugs die Geschwindigkeit des eigenen Fahrzeugs an die Geschwindigkeit eines vorausfahrenden Fahrzeugs anzupassen und den Abstand zu dem vorausfahrenden Fahrzeug auf einen geeigneten Wert zu regeln. Das Ortungssystem 18 kann beispielsweise einen Radarsensor umfassen, beispielsweise einen winkelauflösenden Radarsensor, der die Ortung eines vorausfahrenden Fahrzeugs und Bestimmung seiner Relativgeschwindigkeit ermöglicht.

In einem aktivierten Zustand des Längsführungsreglers 12 regelt dieser auf der Basis der Ortungsdaten, insbesondere Abstand und Relativgeschwindigkeit eines Zielobjekts, und der Fahrzustandsparameter die Fahrgeschwindigkeit im Rahmen einer vom Fahrer als Sollwert einstellbaren oberen Geschwindigkeitsgrenze, um einen Zielabstand von dem vorausfahrenden Fahrzeug, dem Zielobjekt, einzuhalten. Der Zielabstand ist beispielsweise geschwindigkeitsabhängig und wird üblicherweise in Form eines zeitlichen Abstandes zu dem vorausfahrenden Fahrzeug vorgegeben. Der zeitliche Abstand ist beispielsweise vom Fahrer wählbar.

Der Längsführungsregler 12 ist insbesondere ein Stop-and-Go-ACC-System und dazu eingerichtet, im Rahmen der Geschwindigkeits- und Abstandsregelung das Fahrzeug bis zum Stillstand abzubremsen, wenn das vorausfahrende Fahrzeug stehen bleibt, und bei erneuter Aufnahme der Fahrt des vorausfahrenden Fahrzeugs das eigene Fahrzeug selbstständig anzufahren und die Geschwindigkeitsregelung fortzusetzen.

Bei einer freien Fahrspur vor dem eigenen Fahrzeug regelt der Längsführungsregler 12 die Fahrgeschwindigkeit auf den vom Fahrer vorgegebenen Sollwert der Geschwindigkeit.

Der Querführungsregler 14 bildet beispielsweise einen Stauassistenten, der dazu eingerichtet ist, das eigene Fahrzeug, basierend auf Signalen einer Sensoreinrichtung 28 zur Erfassung einer Fahrbahnspur und auf Signalen eines Lenkwinkelsensors 30, durch Ausgabe von Lenkbefehlen an ein Lenkungsstellglied 32 des Fahrzeug das Fahrzeug selbsttätig und autonom in einer Fahrbahnspur zu führen. Der Querführungsregler 14 ist dazu eingerichtet, die Lenkung des Fahrzeugs in einer Stausituation innerhalb eines begrenzten Geschwindigkeitsbereiches autonom durchzuführen. Der Geschwindigkeitsbereich kann beispielsweise eine obere Grenze bei 30 km/h oder 40 km/h haben.

Zur Lenkungsregelung erfasst der Querführungsregler 14 beispielsweise mittels der Sensoreinrichtung 28, die beispielsweise eine oder mehrere Videokameras umfassen kann, eine Abweichung des eigenen Fahrzeugs von einem Sollfahrschlauch innerhalb einer erkannten Fahrbahnspur und berechnet einen entsprechenden Korrekturbefehl, der an das Lenkungsstellglied 32 ausgegeben wird. Fahrbahnspurbegrenzungen werden beispielsweise anhand von durchgehenden oder unterbrochenen Fahrbahnmarkierungen oder anderen sichtbaren Merkmalen in den erfassten Bildern der Sensoreinrichtung 28 erkannt.

Die elektronische Schaltung 10 umfasst beispielsweise eine programmierbare elektronische Datenverarbeitungseinrichtung, welche zur Durchführung von Berechnungen des Längsführungsreglers 12 und/oder des Querführungsreglers 14 eingerichtet ist und/oder den Längsführungsregler 14 und/oder den Querführungsregler 14 umfasst.

Der Fahrer kann den Längsführungsregler 12 und den Querführungsregler 14 über ein Bedienelement 34 aktivieren und deaktivieren. Das Bedienelement 34 umfasst beispielsweise einen Wahlschalter oder Tasten. Dabei ist der Querführungsregler 14 nur gemeinsam mit oder zusätzlich zu dem Längsführungsregler 12 aktivierbar, und der Längsführungsregler 12 ist bei aktiviertem Querführungsregler 14 nur einhergehend mit einer Deaktivierung des Querführungsreglers 14 deaktivierbar.

Der Längsführungsregler 12 und der Querführungsregler 14 sind in zwei Stufen aktivierbar: In einer Stufe 1 ist lediglich der Längsführungsregler 12 aktiviert. In einer Stufe 2 sind beide Regler 12, 14 aktiviert.

Wird eine Stufe 0 gewählt, so werden sowohl der Längsführungsregler 12 als auch der Querführungsregler 14 zur Deaktivierung angesteuert, sofern sie noch aktiviert waren. Dies ist in Fig. 1 durch einen Signalpfad "0" gekennzeichnet.

Wird die Stufe 1 angewählt, was in Fig. 1 durch einen Signalpfad "1" gekennzeichnet ist, so wird bei deaktiviertem Längsführungsregler 12 der Längsführungsregler 12 zur Aktivierung angesteuert, d.h. es erfolgt ein Übergang von Stufe 0 zu Stufe 1. Bei bereits aktivierten Reglern 12, 14 wird bei Anwahl der Stufe 1 der Querführungsregler 14 zur Deaktivierung angesteuert, entsprechend einem Übergang von Stufe 2 zu Stufe 1.

Wird die Stufe 2 angewählt, so wird der Querführungsregler 14 zur Aktivierung angesteuert, und der Längsführungsregler 12 wird zur Aktivierung angesteuert, falls er noch nicht aktiviert war. Dies ist in Fig. 1 durch einen Signalpfad "2" verdeutlicht.

Ein Lenkungssensor in Form eines Lenkradmomentsensors 36 ist dazu eingerichtet, ein vom Fahrer auf das Lenkrad ausgeübtes Lenkmoment zu erfassen und bei Überschreitung eines Schwellwertes ein entsprechendes Signal auszugeben. Das Signal des Lenkradmomentsensors 36 steuert den Querführungsregler 14 zur Deaktivierung an, wie in Fig. 1 als Signalpfad dargestellt ist. Das Signal des Lenkradmomentsensors 36 lässt den Längsführungsregler 12 unbeeinflusst.

Ein Gaspedalsensor 38 erfasst eine Betätigung des Gaspedal des Fahrzeugs, beispielsweise eine einen Schwellwert überschreitende Abwärtsbewegung des Gaspedals oder eine auf das Gaspedal ausgeübte Kraft bzw. ein Drehmoment, welche/welches einen Schwellwert überschreitet. Ein entsprechendes Signal des Gaspedalsensors 38 steuert den Querführungsregler 14 zur Deaktivierung an. Außerdem steuert das Signal den Längsführungsregler 12 zum zeitweiligen Überstimmen der Regelung des Längsführungsreglers 12 an. Entsprechende Signalpfade sind in Fig. 1 mit Pfeilen dargestellt. Der Längsführungsregler 12 ist dazu eingerichtet, bei Empfang des Signals vom Lenkradmomentsensor 36 für die Dauer der Betätigung des Gaspedals die Regelfunktion auszusetzen, so dass das Fahrzeug gemäß der Vorgabe des Fahrers über das Gaspedal gesteuert wird. Wenn das Gaspedal freigegeben wird, setzt die Geschwindigkeitsregelung des Längsführungsreglers 12 sanft wieder ein.

Ein Bremspedalsensor 40 erfasst eine Betätigung des Bremspedals durch den Fahrer. Er kann in entsprechender Weise arbeiten, wie oben für den Gaspedalsensor erläutert wurde. Ein entsprechendes Signal steuert sowohl den Längsführungsregler 12 als auch den Querführungsregler 14 zur Deaktivierung an. Die Signalpfade sind in Fig. 1 mit Pfeilen dargestellt.

Die die Signalpfade für die Signale von Lenkradmomentsensor 36, Gaspedalsensor 38 und Bremspedalsensor 40 bereitstellenden Teile des Systems und die die Signale verarbeitenden Teile des Längsführungsreglers 12 und des Querführungsreglers 14 bilden somit eine Deaktivierungseinrichtung, die dazu eingerichtet ist, gesteuert durch ein Signal des Lenkradmomentsensors 36 oder des Gaspedalsensors 38 den Querführungsregler 14 zu deaktivieren, ohne den Längsführungsregler 12 zu deaktivieren, wobei die Deaktivierungseinrichtung weiter dazu eingerichtet ist, gesteuert durch ein Signal des Bremspedalsensors 40 den Querführungsregler 14 und den Längsführungsregler 12 zu deaktivieren.

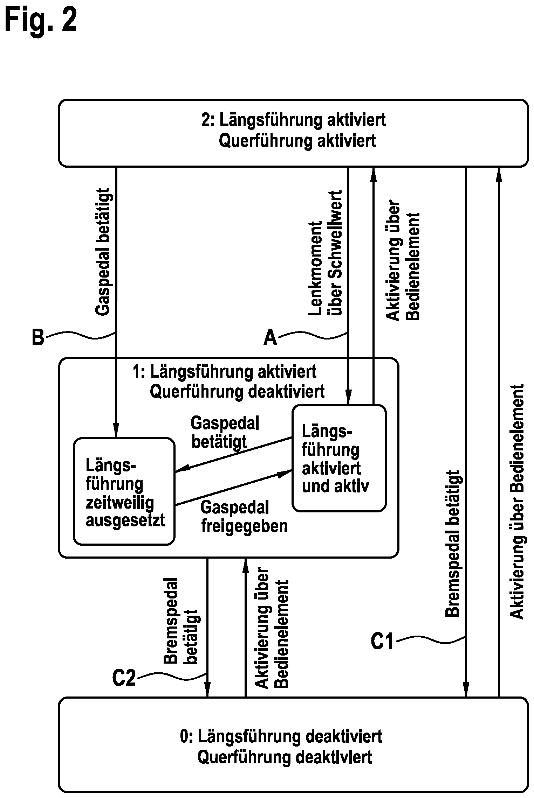

Über die Signale des Lenkradmomentsensors 36, des Gaspedalsensors 38 und des Bremspedalsensors 40 hat der Fahrer drei Wege, das Fahrerassistenzsystem bei aktiviertem Längsführungsregler 12 und aktiviertem Querführungsregler 14 (Stufe "2") zu überstimmen, wie in Fig. 2 dargestellt ist.

Wird vom Fahrer ein Lenkmoment über dem beispielsweise geschwindigkeitsabhängig parametrisiertem Schwellwert aufgebracht, so erfolgt eine Deaktivierung (A) des Querführungsreglers 14. Der Schwellwert nimmt beispielsweise mit zunehmender Geschwindigkeit ab, so dass bei besonders geringen Geschwindigkeiten ein stärkerer Lenkeingriff erforderlich ist, um das System zu überstimmen. Das System geht in einen Aktivierungszustand mit aktiviertem Längsführungsregler 12 und deaktiviertem Querführungsregler über (Stufe "1"). Eine Wiederaufnahme der Querregelung durch den Querführungsregler muss vom Fahrer unter Verwendung des Bedienelements 34 explizit eingefordert werden.

In Vorbereitung auf eine mögliche Übernahme der Querregelung durch den Fahrer kann der Fahrer die Hände bereits vorher ans Lenkrad nehmen, ohne dass der Querführungsregler dadurch bereits deaktiviert würde.

Die Längsregelung durch den Längsführungsregler 12 kann durch Betätigen des Gaspedals vom Fahrer überstimmt werden. Der Längsführungsregler 12 bleibt dabei aktiviert. Die Längsregelung wird wieder aufgenommen, sobald das Gaspedal freigegeben wird. Sofern die Querregelung durch den Querführungsregler 14 bei Betätigung des Gaspedals noch aktiviert war, wird sie durch Betätigung des Gaspedals deaktiviert (B). Dabei wird zugleich die Längsführung durch den Längsführungsregler 12 zeitweise überstimmt, bis das Gaspedal wieder freigegeben wird.

Weiter kann die Längs- und Querführung durch die Regler 12, 14 vom Fahrer überstimmt werden, indem der Fahrer das Bremspedal betätigt (C1). In diesem Fall werden sowohl der Längsführungsregler 12 als auch der Querführungsregler 14 deaktiviert (Stufe "0"). Wenn ausschließlich der Längsführungsregler 12 aktiviert war, wird dieser ebenfalls durch Betätigung des Bremspedals deaktiviert (C2). Sind Längs- und Querführung deaktiviert, so können sie mittels des Bedienelements 34 wieder aktiviert werden, die Querführung jedoch nicht ohne die Längsführung.

Gemäß einem Ausführungsbeispiel kann vorgesehen sein, dass bei einer Deaktivierung des Querführungsreglers ein Übernahmeanforderungssignal an den Fahrer ausgegeben wird, wenn der Fahrer noch keine Hand am Lenkrad hat oder wenn der Fahrer noch kein Lenkmoment über den Schwellwert auf das Lenkrad ausübt.

In Fig. 1 ist gestrichelt ein Signalisierungselement 42 zur Ausgabe eines Übernahmeaufforderungssignals an den Fahrer dargestellt. Bei diesem Signal kann es sich beispielsweise um einen Warnton und/oder ein Lichtsignal handeln. Wenn eine Übernahmeaufforderung an den Fahrer erfolgt, wird die Lenkungsregelung durch den Querführungsregler 14 für eine kurze Übernahmezeit zeitweilig fortgeführt, um dem Fahrer Gelegenheit zu geben, die Lenkung zu übernehmen. Eine Lenkungsübernahme durch den Fahrer wird an einem Signal eines Lenkradsensors erkannt, der eine Betätigung des Lenkrades durch den Fahrer erfasst. Bei dem Lenkradsensor kann es sich beispielsweise um den Lenkradmomentsensor 36 handeln. Die Lenkungsübernahme kann dann an dem Signal erkannt werden, das ein vom Fahrer auf das Lenkrad aufgebrachtes Lenkmoment anzeigt. Zusätzlich oder alternativ kann eine Lenkradsensor in Form eines Berührungssensors vorgesehen sein, der eine Berührung des Lenkrads durch den Fahrer erfasst. Eine Übernahme der Lenkung durch den Fahrer kann dann basierend auf einem Signal des zusätzlichen Lenkradsensors erkannt werden, das eine Berührung des Lenkrads durch den Fahrer anzeigt. Wenn das Signal des Lenkradsensors anzeigt, dass eine Führung des Lenkrads durch den Fahrer erfolgt, kann die Ausgabe des Übernahmeaufforderungssignals beendet werden.

Die beschriebene Übernahmeaufforderungsprozedur kann beispielsweise Bestandteil der Deaktivierung des Querführungsreglers 14 sein, wenn die Deaktivierung durch das Signal des Gaspedalsensors 38 und/oder durch das Signal des Bremspedalsensors 40 bewirkt wird.

Während sich die beschriebenen Beispiele auf einen Querführungsregler 14 beziehen, der eine autonome Fahrzeuglenkung übernehmen kann, ist es selbstverständlich auch denkbar, dass der Querführungsregler 14 ein Regler ist, der lediglich unterstützend in die durch den Fahrer bewirkte Lenkung des Fahrzeugs eingreift. Beispielsweise kann der Querführungsregler 14 ein Spurhalteassistent seind, der über das Lenkungsstellglied 32 im Falle einer erforderlichen Lenkungskorrektur ein Korrekturmoment auf das Lenkrad bzw. die Lenksäule des Fahrzeugs ausübt, dem der Fahrer durch entsprechende Bewegung des Lenkrades nachgeben kann. Gibt der Fahrer dem Korrekturmoment nach, so erfolgt ein entsprechender Eingriff in die Lenkung des Fahrzeugs.

## Patentansprüche

1. Fahrerassistenzsystem für Kraftfahrzeuge, aufweisend:
- einen Längsführungsregler (12), der dazu eingerichtet ist, auf das Antriebssystem (22) des Fahrzeugs einzuwirken,
- eine Sensoreinrichtung (28) zur Erfassung einer Fahrbahnspur,
- einen Querführungsregler (14) zur Auswertung von Signalen der Sensoreinrichtung (28) und zur Ausgabe von Lenkbefehlen an ein Lenkungsstellglied (32) des Fahrzeugs,
- wenigstens ein Bedienelement (34), durch das der Querführungsregler (14) nur gemeinsam mit oder zusätzlich zu dem Längsführungsregler (12) aktivierbar ist,
- einen Lenkungssensor (36), der eine Betätigung des Lenkrades des Fahrzeugs durch den Fahrer erfasst,
- einen Bremspedalsensor (40), der eine Betätigung des Bremspedals des Fahrzeugs erfasst, wobei durch ein Signal des Bremspedalsensors (40) der Querführungsregler (14) und der Längsführungsregler (12) deaktivierbar sind, und
- einen Gaspedalsensor (38), der eine Betätigung des Gaspedals des Fahrzeugs erfasst,
**dadurch gekennzeichnet, dass**
der Querführungsregler (14) durch ein Signal des Lenkungssensors (36) deaktivierbar ist, ohne dass der Längsführungsregler (12) deaktiviert wird, und dass
der Querführungsregler (14) durch ein Signal des Gaspedalsensors (38) deaktivierbar ist, ohne dass der Längsführungsregler (12) deaktiviert wird.

2. Fahrerassistenzsystem nach Anspruch 1, mit einem Signalisierungselement (42) zum Ausgeben eines Übernahmeaufforderungssignals an den Fahrer des Fahrzeugs,
wobei der Querführungsregler (14) dazu eingerichtet ist, bei einer Deaktivierung durch das Signal des Gaspedalsensors (38) das Signalisierungselement (42) zur Ausgabe eines Übernahmeaufforderungssignals an den Fahrer anzusteuern und die Regelfunktion des Querführungsreglers (14) für eine Übernahmezeit vorübergehend fortzuführen, wenigstens soweit innerhalb der Übernahmezeit durch einen Lenkradsensor (36) kein Signal erzeugt wird, das eine Führung des Lenkrads durch den Fahrer anzeigt.

3. Fahrerassistenzsystem nach Anspruch 1 oder 2, wobei der Längsführungsregler (12) dazu eingerichtet ist, dass ein Signal des Gaspedalsensors (38) ein vorübergehendes Aussetzen der Regelfunktion des Längsführungsreglers (12) für die Dauer der Betätigung des Gaspedals bewirkt.

4. Fahrerassistenzsystem nach einem der vorstehenden Ansprüche, wobei der Lenkungssensor (36) dazu eingerichtet ist, ein vom Fahrer auf das Lenkrad des Fahrzeugs aufgebrachtes Lenkmoment zu erfassen.

5. Fahrerassistenzsystem nach einem der vorstehenden Ansprüche, bei dem der Querführungsregler durch das wenigstens eine Bedienelement (34) lediglich dann aktivierbar ist, wenn die Geschwindigkeit des Fahrzeugs einen Grenzwert nicht übersteigt.

6. Fahrerassistenzsystem nach einem der vorstehenden Ansprüche, bei dem der Querführungsregler (14) ein Stauassistent ist.

7. Fahrerassistenzsystem nach einem der vorstehenden Ansprüche, weiter aufweisend ein Ortungssystem (18) zur Ortung von Objekten im Vorfeld des eigenen Fahrzeugs,
wobei der Längsführungsregler (12) ein adaptiver Abstands- und Geschwindigkeitsregler ist, der dazu eingerichtet ist, basierend auf Ortungsdaten des Ortungssystems (18) die Geschwindigkeit des eigenen Fahrzeugs an die Geschwindigkeit eines vorausfahrenden, georteten Fahrzeugs anzupassen und den Abstand zu dem vorausfahrenden Fahrzeug zu regeln.

8. Fahrerassistenzsystem nach Anspruch 7, wobei der Längsführungsregler (12) ein Stop-and-Go-Regler ist, der dazu eingerichtet ist, das eigene Fahrzeug bis zum Stillstand abzubremsen, wenn das vorausfahrende Fahrzeug stehenbleibt, und bei erneuter Aufnahme der Fahrt des vorausfahrenden Fahrzeugs das eigene Fahrzeug selbstständig wieder anzufahren.

## Claims

1. Driver assistance system for motor vehicles, comprising:
- a longitudinal guidance controller (12) which is configured to act on the drive system (22) of the vehicle,
- a sensor device (28) for detecting a traffic lane,
- a lateral guidance controller (14) for evaluating signals of the sensor device (28) and for outputting steering commands to a steering actuator element (32) of the vehicle,
- at least one operator control element (34) by which the lateral guidance controller (14) can be activated only together with or in addition to the longitudinal guidance controller (12),
- a steering sensor (36) which senses activation of the steering wheel of the vehicle by the driver,
- a brake pedal sensor (40) which senses activation of the brake pedal of the vehicle, wherein the lateral guidance controller (14) and the longitudinal guidance controller (12) can be deactivated by a signal of the brake pedal sensor (40), and
- an accelerator pedal sensor (38) which senses activation of the accelerator pedal of the vehicle,
**characterized in that**
the lateral guidance controller (14) can be deactivated by a signal of the steering sensor (36) without the longitudinal guidance controller (12) being deactivated, and **in that**
the lateral guidance controller (14) can be deactivated by a signal of the accelerator pedal sensor (38) without the longitudinal guidance controller (12) being deactivated.

2. Driver assistance system according to Claim 1, having a signalling element (42) for outputting a transfer request signal to the driver of the vehicle,
wherein the lateral guidance controller (14) is configured, in the event of deactivation by the signal of the accelerator pedal sensor (38), to actuate the signalling element (42) to output a transfer request signal to the driver and to temporarily continue the control function of the lateral guidance controller (14) for a transfer time, at least insofar as a signal which displays guidance to the steering wheel by the driver is not generated by a steering wheel sensor (36) within the transfer time.

3. Driver assistance system according to Claim 1 or 2, wherein the longitudinal guidance controller (12) is configured in such a way that a signal of the accelerator pedal sensor (38) brings about temporary suspension of the control function of the longitudinal guidance controller (12) for the duration of the activation of the accelerator pedal.

4. Driver assistance system according to one of the preceding claims, wherein the steering sensor (36) is configured to sense a steering torque which is applied to the steering wheel of the vehicle by the driver.

5. Driver assistance system according to one of the preceding claims, in which the lateral guidance controller can be activated by the at least one operator control element (34) only when the speed of the vehicle does not exceed a limiting value.

6. Driver assistance system according to one of the preceding claims, in which the lateral guidance controller (14) is a traffic jam assistant.

7. Driver assistance system according to one of the preceding claims, also comprising a locating system (18) for locating objects ahead of the driver's vehicle,
wherein the longitudinal guidance controller (12) is an adaptive cruise controller which is configured to adapt, on the basis of location data of the locating system (18), the speed of the driver's vehicle to the speed of a vehicle which is travelling ahead and whose location has been determined, and to adjust the distance from the vehicle travelling ahead.

8. Driver assistance system according to Claim 7, wherein the longitudinal guidance controller (12) is a stop-and-go controller which is configured to brake the driver's vehicle to a stationary state if the vehicle travelling ahead remains stationary, and to start the driver's vehicle automatically again when the vehicle travelling ahead begins to travel again.

## Revendications

1. Système d'assistance au conducteur pour véhicules automobiles, comprenant :
- un régulateur de guidage longitudinal (12) qui est conçu pour intervenir sur le système de propulsion (22) du véhicule,
- un dispositif capteur (28) destiné à détecter une voie de la chaussée,
- un régulateur de guidage transversal (14) destiné à interpréter les signaux du dispositif capteur (28) et à délivrer des instructions de direction à un actionneur de direction (32) du véhicule,
- au moins un élément de commande (34) par le biais duquel le régulateur de guidage transversal (14) ne peut être activé que conjointement avec le régulateur de guidage longitudinal (12) ou en complément de celui-ci,
- un capteur de direction (36) qui détecte un actionnement du volant de direction du véhicule par le conducteur,
- un capteur de pédale de frein (40) qui détecte un actionnement de la pédale de frein du véhicule, le régulateur de guidage transversal (14) et le régulateur de guidage longitudinal (12) pouvant être désactivés par un signal du capteur de pédale de frein (40), et
- un capteur de pédale d'accélérateur (38) qui détecte un actionnement de la pédale d'accélérateur du véhicule,
**caractérisé en ce que**
le régulateur de guidage transversal (14) peut être désactivé par un signal du capteur de direction (36) sans que le régulateur de guidage longitudinal (12) soit désactivé, et **en ce que**
le régulateur de guidage transversal (14) peut être désactivé par un signal du capteur de pédale d'accélérateur (38) sans que le régulateur de guidage longitudinal (12) soit désactivé.

2. Système d'assistance au conducteur selon la revendication 1, comprenant un élément de signalisation (42) destiné à délivrer un signal de demande de prise en charge au conducteur du véhicule,
le régulateur de guidage transversal (14) étant conçu pour, lors d'une désactivation par le signal du capteur de pédale d'accélérateur (38), commander l'élément de signalisation (42) pour délivrer un signal de demande de prise en charge au conducteur et poursuivre temporairement la fonction de régulation du régulateur de guidage transversal (14) pendant une durée de prise en charge, au moins sous réserve qu'aucun signal qui indique un guidage du volant de direction par le conducteur ne soit généré pendant la durée de prise en charge par un capteur de direction (36).

3. Système d'assistance au conducteur selon la revendication 1 ou 2, le régulateur de guidage longitudinal (12) étant conçu de telle sorte qu'un signal du capteur de pédale d'accélérateur (38) produit une suspension temporaire de la fonction de régulation du régulateur de guidage longitudinal (12) pendant la durée d'actionnement de la pédale d'accélérateur.

4. Système d'assistance au conducteur selon l'une des revendications précédentes, le capteur de direction (36) étant conçu pour détecter un couple de direction appliqué par le conducteur au volant de direction du véhicule.

5. Système d'assistance au conducteur selon l'une des revendications précédentes, avec lequel le régulateur de guidage transversal ne peut être activé par l'au moins un élément de commande (34) que lorsque la vitesse du véhicule ne dépasse pas une valeur limite.

6. Système d'assistance au conducteur selon l'une des revendications précédentes, avec lequel le régulateur de guidage transversal (14) est un assistant à la conduite dans les embouteillages.

7. Système d'assistance au conducteur selon l'une des revendications précédentes, comprenant en outre un système de localisation (18) destiné à localiser des objets dans l'aire de trafic du véhicule propre,
le régulateur de guidage longitudinal (12) étant un régulateur de distance et de vitesse adaptatif qui est conçu pour adapter la vitesse du véhicule propre à la vitesse d'un véhicule précédent localisé et réguler la distance par rapport au véhicule précédent en se basant sur des données de localisation du système de localisation (18).

8. Système d'assistance au conducteur selon la revendication 7, le régulateur de guidage longitudinal (12) étant un régulateur d'arrêt-relance qui est conçu pour freiner le véhicule propre jusqu'à l'arrêt lorsque le véhicule précédent reste immobile et pour relancer automatiquement le véhicule propre lorsque le véhicule précédent reprend le déplacement.
